# EUROPEAN PATENT APPLICATION

(11) **EP 3 988 502 A2**
(43) Date of publication of application: **27.04.2022**
(21) Application number: 22152993.6
(22) Date of filing: 24.01.2022
(51) Int. Cl.: C01B 3/38, C01B 3/48

(54) **HYDROGEN PLANT WITH HIGH CO2 CAPTURE**

(71) Applicant: Haldor Topsøe A/S, 2800 Kgs. Lyngby (DK)
(72) Inventor: CHRISTENSEN, Steffen Spangsberg, 4600 Køge (DK)
(74) Representative: Haldor Topsøe A/S

(57) **Abstract**

A hydrogen plant is provided which comprises a reforming section, a shift section and a hydrogen purification section. The arrangement of CO2-capture sections within the plant provides lower CO₂ emissions.

## Description

### TECHNICAL FIELD

The present invention relates to a hydrogen plant which comprises a reforming section, a shift section and a hydrogen purification section. The arrangement of CO₂-capture sections within the plant provides lower CO₂ emissions.

### BACKGROUND

Following today's demand and competitiveness in hydrogen production, significant efforts have been put into developing optimized production for hydrogen plants, with the objective to improve overall energy efficiency and reduce capital cost. The need for more cost-efficient hydrogen production has spurred the development of technology and catalysts for large-scale hydrogen production units, in order to benefit from economy of scale.

WO2020221642A1 describes an ATR-based hydrogen process and plant. Similar technology is provided in EP 2103569 B1, US 8187363, US 9028794, US 2018237297 and US 8715617.

It is an object of the present invention to provide a hydrogen plant and/or process having lower total CO₂ emissions. It is an object of the present invention to provide a hydrogen plant and/or process with overall lower investment and operating costs compared to known plants, and without compromising energy efficiency.

### SUMMARY

The present invention relates to hydrogen plants as described in claims 1 and 2, and associated processes for producing hydrogen in such hydrogen plants.

Further details of the plants and processes are provided in the following description text and the appended claims.

### LEGENDS TO THE FIGURES

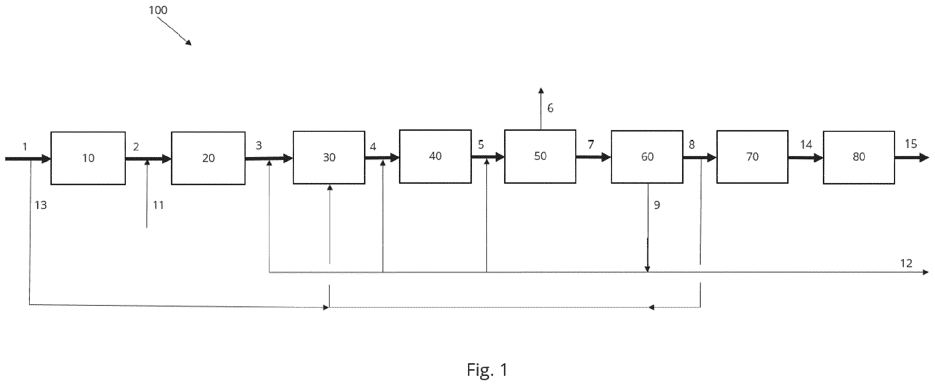

Fig. 1 shows a first embodiment of the hydrogen plant of the invention.

### DETAILED DISCLOSURE

In the first embodiment, a hydrogen plant is provided, comprising:
- a first hydrocarbon feed (1) to said hydrogen plant;
- a reforming section;
- wherein said reforming section is arranged to receive said first hydrocarbon feed and output at least a first synthesis gas stream;
- a shift section arranged to receive at least a portion of said first synthesis gas stream and provide a second synthesis gas stream;
- a first CO₂-capture section arranged to receive at least a portion of said second synthesis gas stream and provide a third synthesis gas stream and a first CO₂-rich stream;
- a hydrogen purification section arranged to receive at least a portion of said third synthesis gas stream and provide at least a hydrogen-rich stream and a first off-gas stream;

In the second embodiment, the arrangement of second CO₂-capture section and hydrogen purification section are reversed, so as to provide a hydrogen plant comprising:
- a first hydrocarbon feed to said hydrogen plant;
- a reforming section;
- wherein said reforming section is arranged to receive said first hydrocarbon feed and output at least a first synthesis gas stream;
- a shift section arranged to receive at least a portion of said first synthesis gas stream and provide a second synthesis gas stream;
- a hydrogen purification section arranged to receive at least a portion of said second synthesis gas stream and provide at least a hydrogen-rich stream and a first off-gas stream,
- a first CO₂-capture section arranged to receive at least a portion of said first off-gas stream and provide a third synthesis gas stream and a first CO₂-rich stream;

In an embodiment, the hydrogen plant according to the invention further comprises a methanation reactor arranged to receive the hydrogen-rich stream and subject it to a methanation reaction to produce a CO-depleted the hydrogen-rich stream. In this embodiment, the hydrogen plant may further comprise a drying unit arranged to receive the CO-depleted the hydrogen-rich stream and produce a dried, CO-depleted hydrogen-rich stream. In some applications it is desirable that the produced hydrogen-rich stream has a high level of purity and a low content of CO, e.g. for use in fuel cells. The present invention is based on the recognition that it is possible to obtain such a high-purity hydrogen-rich product stream by subjecting the hydrogen-rich stream from the hydrogen purification section to further treatment in a methanation reactor, wherein the hydrogen-rich stream is subjected to the reaction (1).

CO (g) + 3H₂ (g) ↔ CH₄ (g) + H₂O (g) (1)

By reaction (1) CO is converted to CH4 and H2O to reduce the level of CO in the stream. The H2O produced may subsequently be removed in a drying unit. The drying unit may e.g. be a Temperature Swing Absorption (TSA) unit.

The process and plant described herein comprise various feeds. For the avoidance of doubt, the term "feed" refers to means for supplying said gas to the appropriate stage, reactor or unit; such as a duct, tubing etc. as well as any gas provided via said means.

In one aspect, the hydrocarbon feed comprises one or more hydrocarbons selected from methane, ethane, propane or butanes. An example of the hydrocarbon feed can be a natural gas stream external to the syngas stage. Possible sources of the hydrocarbon feed comprising hydrocarbons external to the syngas stage include natural gas, LPG, refinery off-gas, naphtha, off-gas, tail gas, purge gas, and renewables, but other options are also conceivable.

In some cases, a feed comprising hydrocarbons may be subjected to pre-reforming before being provided to the reforming section. For example, when the hydrocarbon feed is e.g. a LPG and/or a naphtha product stream or a natural gas feed, the hydrogen plant may further comprise a pre-reforming unit upstream the reforming section.

In an embodiment, the reforming section of the hydrogen plant of the invention comprises one or more reactors selected from the group consisting of a fired steam methane reforming (SMR) reactor, an electrically heated steam methane reforming (e-SMR) reactor, an autothermal reformer (ATR) and an HTCR (Haldor Topsoe Convection Reformer).

In an embodiment, the fired SMR may be a fired bayonet-type SMR. Conventional bayonet tube reactors consist of an inner tube coaxially arranged in an outer sheath tube. Catalyst particles are loaded in an annular space defined between the walls of the inner tube and the outer tube. A process stream of reactants is reacted by passing the stream through the catalyst in heat conducting relationship with heat conducting medium flowing externally along the wall of the sheath tube. Heat for endothermic reactions is partially supplied by the burners e.g. located on the side walls of a furnace box of a reformer. When used in heat requiring endothermic reactions, part of the heat for the reactions in the process stream is supplied by indirect heat exchange with the process stream in the tube. Having passed through the catalyst, the reacted process stream impinges against the closed end of the outer tube, where the stream reverses its direction to the inner tube of the reactor, and is then withdrawn from the reactor as product stream.

In an embodiment of the invention, wherein the reforming section comprises a fired SMR, at least a portion of the first off-gas stream and/or a portion of the third synthesis gas stream is arranged to be recycled to the fired SMR reactor as a fuel feed. In an embodiment, the hydrogen-rich stream is recycled to the fired SMR reactor as a fuel feed. The phrase "recycled to the SMR reactor" includes both recycling directly to the fired and recycling to the stream being received by the fired SMR reactor.

In an embodiment, the first off-gas stream from the hydrogen purification section is recycled to the pre-reformer, to the reforming section, to the shift section or to the hydrogen purification section. The first off-gas may be recycled directly to the unit or section in question or to the stream being received by the unit or section in question.

As used herein, the term "CO₂-rich stream" means a stream containing 95%vol. or more, for instance 99.5% of carbon dioxide.

The processes and plants described herein provide a hydrogen-rich stream. The hydrogen-rich stream is suitably "hydrogen rich" meaning that the major portion of this stream is hydrogen; i.e. over 75%, such as over 85%, preferably over 90%, more preferably over 95%, even more preferably over 99% of this stream is hydrogen. In addition to hydrogen, the hydrogen-rich stream may for example comprise steam, nitrogen, argon, carbon monoxide, carbon dioxide, and/or hydrocarbons. The hydrogen-rich stream suitably comprises only low amounts of hydrocarbon, such as for example less than 5% hydrocarbons or less than 3% hydrocarbons or less than 1% hydrocarbons.

In either embodiment, the shift section may comprise at least one, and preferably a series of high-temperature shift sections. The temperature in the high temperature shift step is in the range 300 - 600°C, such as 360-470°C, or such as 345-550°C. This means that according to the present process/plant it is possible to run a high temperature shift reaction on a feed with much lower steam/carbon ratio than possible by known processes. For example, the high temperature shift inlet temperature may be 300 - 400°C, such as 350 - 380°C.

The shift section may also comprise at least one low-temperature shift section, arranged downstream at least one high-temperature shift section. The LT shift step may be carried out at temperatures at T_{dew} +15 - 290°C, such as, 200-280°C. For example, the low temperature shift inlet temperature is from T_{dew} +15- 250°C, such as 190-210°C. The provision of additional shifts units or shifts steps adds flexibility to the plant and/or process when operating at low steam/carbon ratios. The low steam/carbon ratio may re- suit in a lower than optimal shift conversion which means that in some embodiments it may be advantageous to provide one or more additional shift steps.

The high temperature shift (HTS) section suitably comprises a promoted zinc-aluminium oxide based high temperature shift catalyst, preferably arranged within said HTS section in the form of one or more catalyst beds, and preferably wherein the promoted zinc-aluminum oxide based HT shift catalyst comprises in its active form a Zn/AI molar ratio in the range 0.5 to 1.0 and a content of alkali metal in the range 0.4 to 8.0 wt % and a copper content in the range 0-10% based on the weight of oxidized catalyst.

The term "shift" means water gas shift (WGS), i.e. a reaction between carbon monoxide and steam to form hydrogen and carbon dioxide.

Suitably, the hydrogen purification section comprises a pressure-swing absorption (PSA) unit, a cryogenic unit, or a hydrogen membrane separation unit, or a combination thereof, preferably a PSA unit.

The first, second and third CO₂-capture sections are suitably selected from an amine wash unit, a CO₂ membrane separation unit, or a cryogenic separation unit, preferably an amine wash unit.

Cryogenic separation typically utilizes the phase change of different species in the gas to separate individual components (i.e. CO2) from a gas mixture by controlling the temperature, typically taking place below -50°C. Such a cryogenic separation unit typically comprises a first cooling stage of the synthesis gas, followed by cryogenic flash separation unit to separate the liquid condensate from the gas phase. Cooling for the first cooling stage may be provided by the resulting product from the cryogenic flash separation unit, potentially in the combination with other coolants. Optionally, one or more of the products from the CO2 removal unit may be expanded to some extent to make a colder process gas for this cooling stage. Cryogenic separation of CO2 must be facilitated at elevated pressure, at least above the triple point of CO2 to allows condensation of CO2. A suitable pressure regime is therefore at least above the triple point of 5 bar, where increased pressure gives increased liquid yields.

In an embodiment of the invention, the cryogenic CO2 separation section is operated at a temperature of from ca. -30°C to -80°C. In an embodiment of the invention, the amount of CO2 condensed in the cryogenic separation is increased by reducing the operation temperature.

In an embodiment, the cryogenic CO2 separation section comprises a cooling unit, followed by a flash separation unit, followed by a heating unit. In an embodiment, the cryogenic CO2 separation section comprises a gas dryer unit. Preferably, the gas dryer unit is the first unit of the cryogenic CO2 separation section.

The hydrogen plant according to these embodiments may further comprise a methanol removal section arranged downstream the shift section, said methanol removal section being arranged to separate a methanol-rich stream from said third syngas stream.

In another embodiment, the plant further comprises a compressor i.e. off-gas recycle compressor arranged so as to compress whichever off-gas stream or synthesis stream is recycled to the SMR reactor.

The invention also provides processes, which take place in the hydrogen plant according to the above embodiments.

A first process for producing a hydrogen-rich stream in a hydrogen plant according to the first embodiment is provided. This process comprises the steps of:
- feeding a first hydrocarbon feed to said hydrogen plant;
- providing said first hydrocarbon feed to the reforming section and outputting at least a first synthesis gas stream;
- feeding at least a portion of said first synthesis gas stream to a shift section and providing a second synthesis gas stream;
- feeding at least a portion of said second synthesis gas stream (41) to a first CO₂-capture section and providing a third synthesis gas stream and a first CO₂-rich stream;
- feeding at least a portion of said third synthesis gas stream to a hydrogen purification section and providing at least a hydrogen-rich stream and a first off-gas stream.

A second process for producing a hydrogen-rich stream in a hydrogen plant according to the second embodiment is provided. This process comprises the steps of:
- feeding a first hydrocarbon feed to said hydrogen plant;
- providing said first hydrocarbon feed to the reforming section and outputting at least a first synthesis gas stream;
- feeding at least a portion of said first synthesis gas stream to a shift section and providing a second synthesis gas stream;
- feeding at least a portion of said second synthesis gas stream to a hydrogen purification section providing at least a hydrogen-rich stream and a first off-gas stream,
- feeding at least a portion of said first off-gas stream to a first CO₂-capture section and providing a third synthesis gas stream and a first CO₂-rich stream.

In either process, the steam/carbon ratio of the first synthesis gas stream is suitably less than 2.0, preferably 0.3 - 1.0. As above, the shift section may comprise at least one, and preferably a series of high-temperature shift sections, and wherein the temperature in the high temperature shift section is 300 - 600°C, such as 345 - 550°C. In the process and the plant described herein, wherein the reforming section comprises a fired SMR, it is preferred that at least a portion of the third synthesis gas stream is arranged to be recycled to the reforming section as at least a portion of the fuel feed.

Other details of the hydrogen plant set out above are equally relevant for the processes of the invention, mutatis mutandis.

### Detailed description of the Figure

Fig. 1 shows a hydrogen plant 100 comprising a pre-treatment unit 10, a pre-reforming unit 20, a reforming section 30, a water gas shift (WGS) unit 40, a CO2 capture section 50, a hydrogen purification unit 60, a methanation reactor 70 and a drying unit 80.

A hydrocarbon feed stream 1 is fed to the pre-treatment unit 10, wherein it may e.g. be subjected to hydrogenation and sulfur absorption (desulfurization). Steam 11 is added to the pre-treated feed 2, and the mixture is fed to the pre-reforming unit 20, wherein it is steam methane pre-reformed to form a pre-reformed feed 3. The pre-reformed feed 3 is fed to the reforming section 30, which may e.g. be a fired SMR, wherein it is subjected to steam methane reforming to form a first synthesis gas stream 4. The first synthesis gas stream 4 is fed to a water gas shift section 40, wherein it is subjected to a water gas shift reaction to produce a second synthesis gas stream 5 enriched in hydrogen. The second synthesis gas stream 5 is fed to a CO2 capture section 50, wherein it is separated into a CO2 rich gas stream 6 and a third synthesis gas stream 7. The third synthesis gas stream 7 is fed to a hydrogen purification section 60, wherein it is separated into a hydrogen-rich stream 8 and an off-gas stream 9. The hydrogen-rich stream 8 is fed to the methanation reactor 70, wherein it is subjected to a methanation reaction to form CO-depleted hydrogen-rich stream 14, which is subsequently dried in the drying unit 80 to produce dried, CO-depleted the hydrogen-rich product stream 15.

The off-gas stream 9 is recycled to one or more parts of the hydrogen plant 100: The pre-reformed feed stream 3, the reforming section 30 and the first synthesis gas stream 4. Also, a part of the off-gas stream 9 may be exported as an export off-gas 12. Alternatively or additionally, the off-gas 9 recycled to the reforming section may be used as a fuel feed for heating the steam methane reforming reaction. The hydrogen-rich stream 8 is recycled to the reforming section as a fuel feed. Finally, a part 13 of the hydrocarbon feed stream 1 may also be used as a fuel feed for the reforming section.

## Claims

1. A hydrogen plant (100) comprising:
- a first hydrocarbon feed (1) to said hydrogen plant;
- a reforming section;
- wherein said reforming section is arranged to receive said first hydrocarbon feed and output at least a first synthesis gas stream;
- a shift section arranged to receive at least a portion of said first synthesis gas stream and provide a second synthesis gas stream;
- a first CO₂-capture section arranged to receive at least a portion of said second synthesis gas stream and provide a third synthesis gas stream and a first CO₂-rich stream;
- a hydrogen purification section arranged to receive at least a portion of said third synthesis gas stream and provide at least a hydrogen-rich stream and a first off-gas stream;

2. A hydrogen plant comprising:
- a first hydrocarbon feed to said hydrogen plant;
- a reforming section;
- wherein said reforming section is arranged to receive said first hydrocarbon feed and output at least a first synthesis gas stream;
- a shift section arranged to receive at least a portion of said first synthesis gas stream and provide a second synthesis gas stream;
- a hydrogen purification section arranged to receive at least a portion of said second synthesis gas stream and provide at least a hydrogen-rich stream and a first off-gas stream,
- a first CO₂-capture section arranged to receive at least a portion of said first off-gas stream and provide a third synthesis gas stream and a first CO₂-rich stream;

3. The hydrogen plant according to any of the preceding claims, which further comprises a methanation reactor arranged to receive the hydrogen-rich stream and subject it to a methanation reaction to produce a CO-depleted hydrogen-rich stream.

4. The hydrogen plant according to claim 3, which further comprises a drying unit arranged to receive the CO-depleted the hydrogen-rich stream and produce a dried, CO-depleted the hydrogen-rich stream.

5. The hydrogen plant according to any of the preceding claims, wherein the reforming section comprises one or more reactors selected from the group consisting of a fired steam methane reforming (SMR) reactor, an electrically heated steam methane reforming (e-SMR) reactor, an autothermal reformer (ATR) and an HTCR (Haldor Topsoe Convection Reformer).

6. The hydrogen plant according to any of the preceding claims, wherein the reforming section comprises an SMR reactor.

7. The hydrogen plant according to claim 6, wherein at least a portion of the first off-gas stream and/or a portion of the third synthesis gas stream is arranged to be recycled to the SMR reactor as a fuel feed.

8. The hydrogen plant according to claim 6 or 7, wherein the hydrogen-rich stream is recycled to the reforming section as a fuel feed.

9. The hydrogen plant according to any of claims 6-8, wherein a second CO₂-capture section is arranged to receive at least a portion of a flue gas stream from the SMR reactor and provide a second CO₂-rich stream.

10. The hydrogen plant according to any of the preceding claims, wherein a third CO₂-capture section is arranged to receive at least a portion of the first off-gas stream from the hydrogen purification section and provide a third CO₂-rich stream.

11. The hydrogen plant according to any of the preceding claims, wherein a pre-treatment unit is arranged to receive the first hydrocarbon feed and pre-treat it to provide a pre-treated hydrocarbon feed and wherein the reforming section is arranged to receive the pre-treated hydrocarbon feed.

12. The hydrogen plant according to any of the preceding claims, wherein a pre-reforming unit is arranged to receive the first hydrocarbon feed or a pre-treated hydrocarbon feed to provide a pre-reformed hydrocarbon feed, and wherein the reforming section is arranged to receive the pre-reformed hydrocarbon feed.

13. The hydrogen plant according to any of the preceding claims, wherein the first off-gas stream from the hydrogen purification section is recycled to the pre-reformer, to the reforming section, to the shift section or to the hydrogen purification section.

14. The hydrogen plant according to any one of the preceding claims, wherein said shift section comprises at least one, and preferably a series of high-temperature shift sections.

15. The hydrogen plant according to claim 14, wherein said shift section comprises at least one low-temperature shift section, arranged downstream at least one high-temperature shift section.

16. The hydrogen plant according to any of the preceding claims wherein the hydrogen purification section comprises a pressure-swing absorption (PSA) unit, a cryogenic unit, or a hydrogen membrane separation unit, or a combination thereof, preferably a PSA unit.

17. The hydrogen plant according to any of the preceding claims, wherein the first, second and third CO₂-capture sections are selected from an amine wash unit, a CO₂ membrane separation unit, or a cryogenic separation unit, preferably an amine wash unit.

18. The hydrogen plant) according to any one of claims 14-17, wherein the high temperature shift (HTS) section comprises a promoted zinc-aluminium oxide based high temperature shift catalyst, preferably arranged within said HTS section in the form of one or more catalyst beds, and preferably wherein the promoted zinc-aluminum oxide based HT shift catalyst comprises in its active form a Zn/AI molar ratio in the range 0.5 to 1.0 and a content of alkali metal in the range 0.4 to 8.0 wt % and a copper content in the range 0-10% based on the weight of oxidized catalyst.

19. The hydrogen plant according to any one of the preceding claims, further comprising a methanol removal section arranged downstream the shift section, said methanol removal section being arranged to separate a methanol-rich stream from said third syngas stream.

20. The hydrogen plant according to any one of the preceding claims, wherein at least a portion of the third synthesis gas stream is arranged to be recycled to the SMR reactor as at least a portion of the fuel feed.

21. A process for producing a hydrogen-rich stream in a hydrogen plant according to any of claims 1 or 3-20, said process comprising the steps of:
- feeding a first hydrocarbon feed to said hydrogen plant;
- providing said first hydrocarbon feed to the reforming section and outputting at least a first synthesis gas stream;
- feeding at least a portion of said first synthesis gas stream to a shift section and providing a second synthesis gas stream;
- feeding at least a portion of said second synthesis gas stream (41) to a first CO₂-capture section and providing a third synthesis gas stream and a first CO₂-rich stream;
- feeding at least a portion of said third synthesis gas stream to a hydrogen purification section and providing at least a hydrogen-rich stream and a first off-gas stream.

22. A process for producing a hydrogen-rich stream in a hydrogen plant according to any one of claims 2-20, said process comprising the steps of:
- feeding a first hydrocarbon feed to said hydrogen plant;
- providing said first hydrocarbon feed to the reforming section and outputting at least a first synthesis gas stream;
- feeding at least a portion of said first synthesis gas stream to a shift section and providing a second synthesis gas stream;
- feeding at least a portion of said second synthesis gas stream to a hydrogen purification section providing at least a hydrogen-rich stream and a first off-gas stream,
- feeding at least a portion of said first off-gas stream to a first CO₂-capture section and providing a third synthesis gas stream and a first CO₂-rich stream.

23. The process according to any one of claims 21-22, wherein the steam/carbon ratio of the first synthesis gas stream is less than 2.0, preferably 0.3-1.0.

24. The process according to any one of claims 21-23 wherein said shift section comprises at least one, and preferably a series of high-temperature shift sections, and wherein the temperature in the high temperature shift section is 300 - 600°C, such as 345 - 550°C.
